# EUROPEAN PATENT APPLICATION

(11) **EP 1 684 242 A1**
(43) Date of publication of application: **26.07.2006**
(21) Application number: 05007693.4
(22) Date of filing: 05.05.2005
(51) Int. Cl.: G07F 7/08, G07F 7/10

(54) **Prepaid computerized card for currency transfer**

(30) Priority: 24.01.2005 IT MI20050092
(71) Applicant: Blinmore Investments Limited, Nassau (BS)
(72) Inventor: Castrignano, Rocco, Vientiane (LA)
(74) Representative: Cicogna, Franco

(57) **Abstract**

A currency transfer computerized prepaid card comprises memory means, including, for example, an electronic microchip, for memorizing data including at least an identification code and at least a currency amount, the card being designed for being purchased at an agreed selling point and to be used for performing purchasing or cash dispensing operations through a first reimbursement/reloading by the prepaid card.

## Description

### BACKGROUND OF THE INVENTION

The present invention relates to a computerized card, which has been specifically designed for currency transfers or transactions.

As is known, it is frequently necessary to transfer currency from a remote location to another remote location.

Owing to modern electronic communication systems, the currency transfer by telematic methods has afforded quick and safe transfers.

Also known is the fact that it is frequently necessary to transfer currency or electronic cash for example to a son at an abroad country or to a tourist affected by a theft or by an incidental expense.

However, a drawback of prior currency transfer approaches is that they require a direct or indirect binding or relationship with a bank or bank institute.

For example, the transfer service can require that the sending party has a bank account at the bank institute performing the currency transfer, or that the sending party is provided with a credit card, or other type of card, such as an ATM card.

This, on the other hand, cannot be met by some sending parties, for example a seasonal worker or an emigrant, desiring to send currency to a family in the native country, and who cannot have a bank account.

In this connection it should be pointed out that some providers allow to send currency, but at a very high cost.

In such a case too, the receiving party must be able of accessing the provider offices and at the provided time.

Thus, it would be desirable to provide a currency transfer system without causing the sending and receiving parties to necessarily contact a bank institute or the like to perform the currency transfer operation.

### SUMMARY OF THE INVENTION

Accordingly, the aim of the present invention is to provide a computerized card adapted to solve the above mentioned problems affecting the prior art.

Within the scope of the above mentioned aim, a main object of the present invention is to provide such a computerized card allowing easy and safe currency transfer from a country to another to be made.

Yet another object of the present invention is to provide such a computerized card which constitutes a bearer type of card, enabled to access international credit and currency drawing circuits.

According to one aspect of the present invention, the above mentioned aim and objects, as well as yet other objects, which will become more apparent hereinafter, are achieved by a computerized card, specifically designed for currency transfers, characterized in that said computerized card comprises memory means, such as an electronic microchip, of a magnetic, optical or radio read-out type, adapted to store data therein, said data including at least an identification code and at least a currency amount, said card being provided for buying at an agreed selling point and to be used for performing purchasing or currency drawing operations at cash dispensers, by performing a first reimbursement/reloading through the prepaid card.

### DESCRIPTION OF THE PREFERRED EMBODIMENT

Further characteristics and advantages of the present invention will become more apparent from the following detailed disclosure of a preferred, though not exclusive, embodiment of the invention which is illustrated, by way of an indicative but not limitative example, in the following disclosure.

According to the invention, the card comprises memory means, including, for example, an electronic microchip, for example of a magnetic, optic or radio read-out type, designed for storing data therein, said data including at least an identification code and at least a currency amount.

The system based on the computerized card according to the invention is advantageously managed by a service manager or provider, designed for offering, between other services, prepaid service cards for an international telephonic traffic.

Thus, the manager or provider will allow to use the prepaid computerized card according to the invention as an electronic purse.

To exploit the above mentioned service, the provider will agree with credit/debit card suing institutes.

The currency amount on the credit card can be supplied through the reimbursement of the credit of the prepaid cards.

The prepaid computerized card according to the invention can be used for supplying a bearer payment instrument, i.e. a debit card, the so-called "Master" card, which can also operate through the VISA, Mastercard and so on channel.

More specifically, a client can buy any desired newspaper kiosks, tobacco shops or other agreed selling points, a "Master" card, sold together with a prepaid card, which could be used by the client for performing purchasing or currency drawing operations, at any desired "cash dispenser" points.

To exploit the services related to the Master card, the bearer must merely perform the first reimbursement/reloading through the prepaid card.

Thus, the bearer will generate, on a virtual account of the desired bank, a prepaid currency amount, which will supply, through the provided reimbursement and reloading requirements, and this, only by way of an example, in amounts of 50, 100 and 500 eurs.

In particular, the user can use his/her mastercard for performing purchasing and/or drawing operations, for an amount corresponding to the sum of the purchased and reimbursed cards.

Thus, to the practicity of this system for performing small purchasing, is also associated the possibility of drawing cash at abroad, at any place of the word, at a maximum cost of 4%, with respect to the conventional transfer money systems which required a cost of 10-14%.

Moreover, it would be possible to reload the card remotely, while using the card and credit thereon to be immediately used, also at abroad.

This card can also be used in a simple and safe manner for performing on line purchasing operations, within the limit of the loaded amount, thereby preventing an undesired use and a possible clonation of the credit card.

The card manager, in addition to the agreements for distributing the card through conventional channels, such as newspaper kiosks, tobacco shops and the like, can also take agreements with telephonic companies and banks for distributing the cards in countries serviced by these institutions.

It has been found that the invention fully achieves the intended aim and objects.

In fact, the invention provides an universal type of product, which can be distributed and used in any desired place through the world.

Moreover, the computerized card and system according to the invention can be managed and implemented in a very simple manner.

Furthermore, the inventive card provide a lot of distributing and co-marketing possibilities.

Finally, the computerized card according to the present invention would be very interesting for banks and the like for managing active invested capitals and, moreover, this card would be also very interesting for issuing parties, such as credit card issuers, toward novel markets.

In practicing the invention, the used materials, as well as the contingent size and shapes can be any, depending on requirements and the status of the art.

## Claims

1. A computerized card, specifically designed for currency transfers, **characterized in that** said computerized card comprises memory means, such as an electronic microchip, of a magnetic, optical or radio read-out type, adapted to store data therein, said data including at least an identification code and at least a currency amount, said card being provided for buying at an agreed selling point and to be used for performing purchasing or currency drawing operations at cash dispensers, by performing a first reimbursement/reloading through the prepaid card.

2. A computerized card, according to claim 1, **characterized in that** said card is adapted to allow a bearer to provide, on a virtual account of a desired bank, a prepaid currency amount, being supplied through a reloading reimbursement requirement.

3. A computerized card, according to claim 1, **characterized in that** said card can be reloaded in preset currency amounts, such as 50, 100 and 500 eurs.

4. A computerized card, according to claim 1, **characterized in that** it can be used for performing purchasing and/or drawing operations for an amount corresponding to a sum of the purchased and reimbursed cards.

5. A computerized card, according to claim 1, **characterized in that** said it can be used for drawing cash at any places of the word.

6. A computerized card, according to claim 1, **characterized in that** it can be remotely reloaded, thereby allowing a credit accumulated on said card to be used also at abroad.

7. A computerized card, according to claim 1, **characterized in that** it can be used for performing on-line purchasing operations.

8. A computerized card, according to claim 1, **characterized in that** it can be reloaded by purchasing a reload amount at set selling points.

9. A computerized card, according to claim 1, **characterized in that** said card can be reloaded through a bank credit or transfer, to the card account.

10. A computerized card, according to claim 1, **characterized in that** said card can be reloaded by performing currency deposits at enabled selling points.

11. A computerized card, according to claim 1, **characterized in that** said card can be reloaded by a charging on another credit card.
